Europäisches Patentamt

European Patent Office

Office européen des brevets

(11) Numéro de publication : **0 430 787 A1**

# (12) DEMANDE DE BREVET EUROPEEN

(21) Numéro de dépôt : 90403339.6

(22) Date de dépôt : 26.11.90

(51) Int. Cl.⁵ : **F16C 1/22**

(30) Priorité : 27.11.89 FR 8915579

(43) Date de publication de la demande :
05.06.91 Bulletin 91/23

(84) Etats contractants désignés :
**CH DE ES GB IT LI NL SE**

(71) Demandeur : **LA TELEDYNAMIQUE**
**550 rue Saint-Just, Zone Industrielle de Vaux le Pénil**
**F-77000 Melun (FR)**

(72) Inventeur : **Deligny, Jean**
**19, Villa du Bel Air**
**F-93800 Epinay-Sur-Seine (FR)**

(74) Mandataire : **Michelet, Alain**
**BUGNION ASSOCIES 55, rue Boissonade**
**F-75014 Paris (FR)**

(54) Dispositif de rattrapage de jeu automatique destiné à une commande à distance par câble.

(57)     L'invention concerne un dispositif de rattrapage (1) de jeu automatique destiné à une commande à distance par câble. Il comprend :
• un corps creux (10) approximativement cylindrique d'axe (11) muni de reliefs intérieurs (12),
• un bouchon (13) destiné à être fixé sur le corps creux (10) d'une part et sur un des éléments (2) de la gaine d'autre part,
• un cône (14) fixé au deuxième élément (3) de la gaine, placé à l'intérieur du corps (10), d'axe commun à l'axe du corps creux (10), son sommet (15) étant orienté vers le premier élément (2) de la gaine.
• un ressort (16) appliqué d'une part au corps creux (10), d'autre part au deuxième élément (3) de la gaine, tendant à écarter l'un de l'autre les deux éléments de la gaine,
• une cage de verrouillage (17) comportant des éléments de blocage (18, 19) régulièrement répartis entre le corps creux (10) et le cône (14), ayant des formes et dimensions complémentaires des reliefs intérieurs (12) du cylindre creux et de la faxe extérieure (20) du cône (14) de manière à assurer le blocage du cône (14) par rapport au corps creux (10) lorsque les éléments (2, 3) de la gaine sont soumis à une force tendant à les rapprocher.
     Selon l'invention les reliefs intérieurs (12) du corps creux (10) sont constitués de rampes hélicoïdales (21), les éléments de blocage (18, 19) comportent des reliefs complémentaires (22) sur leur face externe et la cage de verrouillage (17) est libre en rotation par rapport au cône (14).

FIG. 2

# DISPOSITIF DE RATTRAPAGE DE JEU AUTOMATIQUE DESTINE A UNE COMMANDE A DISTANCE PAR CABLE

L'invention concerne les commandes par câble.

De telles commandes sont fréquemment utilisées dans les dispositifs mécaniques en général et plus particulièrement dans le domaine de la constuction automobile.

De telles commandes comportent un câble circulant dans une gaine appliquée entre deux points fixes. L'une des extrémités du câble est reliée au levier (pédale, manette, ...) et l'autre extrémité est reliée à l'organe à commander (frein, embrayage, boîte de vitesses, ...).

Ces commandes sont, de manière classique, utilisées pour récupérer le jeu, permanent ou provenant de l'usure, qui peut exister entre l'organe commandé et le levier. A cet effet, différents dispositifs de rattrapage sont connus qui modifient la longueur de la gaine et modifient donc la longueur du parcours suivi par le câble entre les deux points fixes d'appui.

On connaît également de tels dispositifs de rattrapage qui ont un fonctionnement automatique, c'est-à-dire que lorsque le jeu du dispositif de commande varie, par exemple par l'effet de l'usure d'une pièce, le dispositif de rattrapage fait automatiquement varier la longueur du parcours suivi par le câble entre deux points fixes et donc compense le jeu introduit par ailleurs.

Le brevet FR-2 577 330, par exemple, décrit un tel dispositif.

Dans ces dispositifs de l'art antérieur, la longueur du parcours suivi par le câble est réglée par le déplacement relatif d'une pièce de blocage par rapport à des crans formés dans une pièce complémentaire. Le passage de la pièce de blocage d'un cran à un autre est accompagné de bruit, de vibrations et produit au passage de chaque cran une augmentation déterminée de la longueur du parcours.

Le but de la présente invention est de proposer un dispositif de rattrapage de jeu automatique dont le fonctionnement soit souple, qui permette un rattrapage continu du jeu et dont les effets secondaires sont pratiquement imperceptibles.

A cet effet, l'invention concerne un dispositif de rattrapage de jeu automatique destiné à une commande à distance par câble, comprenant une gaine et un câble, le câble coulissant dans la gaine, la gaine étant placée entre deux points fixes et comportant un élément amont et un élément aval, ledit dispositif étant placé sur la gaine entre l'élément amont et l'élément aval et établissant entre ces deux éléments un écart variable et une tension constante. Ce dispositif comprend un corps creux approximativement cylindrique muni de reliefs intérieurs ; un bouchon destiné à être fixé sur le corps creux d'une part et sur un des éléments de la gaine d'autre part ; un cône fixé au deuxième élément de la gaine, placé à l'intérieur du corps, d'axe commun à l'axe du corps creux, dont le sommet est orienté vers le premier élément de la gaine ; un ressort appliqué d'une part au corps creux et d'autre part au deuxième élément de la gaine, tendant à écarter l'un de l'autre les deux éléments de la gaine. Il comporte également une cage de verrouillage comportant des éléments de blocage, régulièrement répartis entre le corps creux et le cône, ayant des formes et dimensions complémentaires des reliefs intérieurs du cylindre creux et de la face extérieure du cône de manière à assurer le blocage du cône par rapport au corps creux lorsque les éléments de la gaine sont soumis à une force tendant à les rapprocher.

Selon l'invention, les reliefs intérieurs du corps creux sont constitués de rampes hélicoïdales. Les éléments de blocage comportent des rampes complémentaires sur leur face externe et la cage de verrouillage est libre en rotation par rapport au cône.

De préférence, les rampes hélicoïdales du corps creux sont composées de filets à grands pas formant un angle compris entre 15° et 60° et de préférence égal à 30° avec l'axe du cylindre creux.

Dans un mode de réalisation préféré, la cage de verrouillage est reliée au cône par un frotteur intermédiaire qui comporte un logement qui enserre une protubérance du cône et est fixé à la cage de verrouillage. Ce frotteur intermédiaire est libre en rotation par rapport au cône et fixé par une liaison à frottement sur le câble.

L'invention sera décrite en détail en référence aux dessins annexés dans lesquels :

- La figure 1 est une vue générale représentant le dispositif de rattrapage de jeu automatique sur la commande à distance par câble.
- La figure 2 est une vue en coupe du dispositif de rattrapage de jeu automatique.
- La figure 3 est une vue en perspective du cône.
- La figure 4 est une vue en perspective de la cage de verrouillage.
- La figure 5 est une vue en perspective du frotteur.

Le dispositif de rattrapage de jeu automatique selon l'invention est globalement représenté par la référence 1. Il est placé sur la gaine 2, 3 de la commande à distance. Le câble 4 permet d'agir à l'aide de la commande 7 sur l'organe 8. La gaine 2, 3 s'appuie, à chacune de ses extrémités, respectivement sur le point fixe 5 et sur le point fixe 6. La modification de la distance entre les extrémités des éléments 2 et 3 de la gaine au niveau du dispositif de rattrapage 1 permet la modification de la longueur du parcours du câble 4 entre les points fixes 5 et 6 et assure le rattrapage du jeu nécessaire.

Le dispositif de rattrapage 1 a pour objet de faire varier cette distance, si cela est nécessaire au rattrapage de jeu, entre les extrémités de la gaine 2 et 3 en l'absence d'action sur le câble 4 et, au contraire, de maintenir constante cette distance lorsqu'une action sur le câble 4 est destinée à agir sur l'organe 8. Le dispositif de rattrapage 1 comporte un corps creux 10 approximativement cylindrique d'axe 11 muni de reliefs intérieurs 12. Ce corps creux 10 est ouvert à l'une de ses extrémités 101 qui est destinée à être fermée par un bouchon 13 et comporte à sa deuxième extrémité 102 une ouverture de dimension juste nécessaire au passage de l'élément de gaine 3.

Le bouchon 13 est fixé sur l'un des éléments 2 de la gaine. Cette fixation est réalisée de telle sorte que tout glissement du bouchon 13 par rapport à la gaine 2 soit impossible lorsque, par action sur le câble, cette jonction est soumise à des forces de compression. Par exemple, l'extrémité de la gaine 21 est engagée dans un alésage 131 du bouchon et vient en butée au fond de celui-ci.

La fixation du bouchon 13 sur le corps creux 10 est conçue de telle sorte qu'elle permette une fermeture rapide de l'ensemble, et évite tout risque de glissement du bouchon 13 sur le corps creux 10 lorsque, par action du câble, cet ensemble est soumis à des forces de compression. L'extrémité 101 du corps creux vient par exemple en butée au fond d'un alésage 132 du bouchon 13, le bord 133 de l'alésage 132 étant susceptible de déformations élastiques permettant l'accrochage du bouchon 13 sur le corps creux 10 par les protubérances 102 dont sont munies ses extrémités.

De préférence, la fixation du bouchon 13 sur le corps creux 10 est scellée de telle sorte que tout démontage de l'un par rapport à l'autre et donc du dispositif de rattrapage, laisse des traces.

Un cône 14 est fixé sur la deuxième partie de gaine 3 et placé à l'intérieur du corps creux 10.

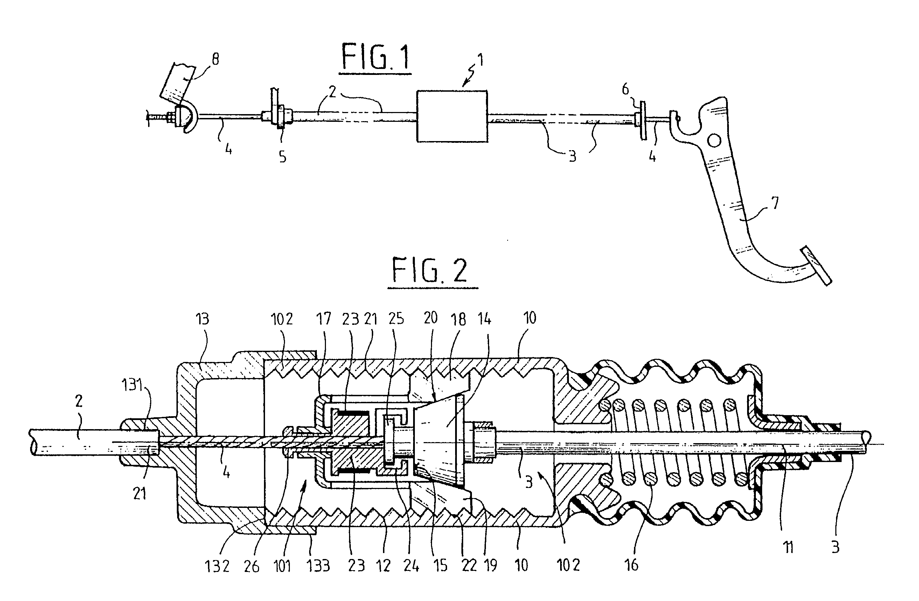

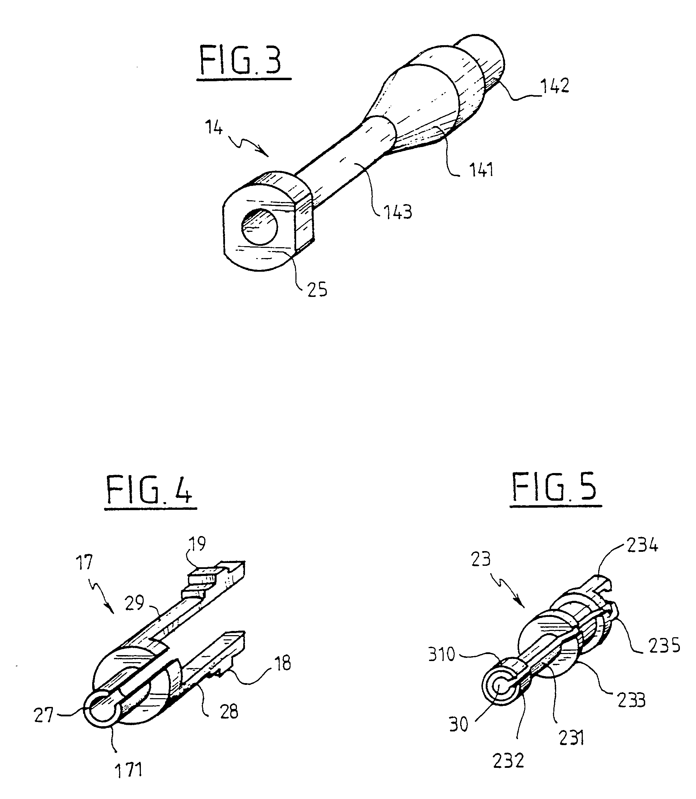

Le nom de "cône" a été conservé à cette pièce en raison de la présence de sa partie tronconique 141 qui lui permet de remplir sa fonction essentielle. Toutefois, cette pièce a une forme plus complexe représentée en détail sur la figure 3. A l'une de ses extrémités, représentée sur la droite des figures 2 et 3, elle comporte un élément 142 approximativement cylindrique destiné à recevoir le deuxième élément de gaine. Cet élément comporte un alésage 143 dans lequel est engagée et fixée l'extrémité de la deuxième partie de gaine 3. Cet élément cylindrique 142 est suivi de l'élément tronconique 141 qui a pour fonction d'agir sur les éléments de blocage 18, 19 qui font partie de la cage de verrouillage 17 et seront décrits plus loin. Elle comporte ensuite une deuxième partie cylindrique 143 puis une protubérance 25.

La cage de verrouillage 17 comporte un élément cylindrique 171 entourant le câble 4 et relié par l'intermédiaire des éléments de jonction élastiquement déformables 28, 29 aux éléments de blocage 18, 19.

La cage de verrouillage 17 est reliée au cône 14 par un frotteur intermédiaire 23. Ce frotteur 23 est représenté sur la figure 5. Il comporte un élément cylindrique 231 destiné à être engagé à l'intérieur de l'élément cylindrique 171 de l'élément de verrouillage 17. Les épaulements 232 et 233 placés aux extrémités du cylindre 231 assurent le positionnement longitudinal du frotteur 23 par rapport à la cage de verrouillage 17 et permettent la transmission de mouvements longitudinaux de l'un à l'autre.

Le frotteur 23 comporte deux membres 234 et 235 formant un logement 24 destiné à enserrer la protubérance 25 du cône 14. Les dimensions respectives du logement 24 et de la protubérance 25 sont telles qu'un certain jeu longitudinal est établi dans la liaison entre le cône 14 et le frotteur 23. La fonction de ce jeu sera exposée plus loin.

La cage de verrouillage 17 et la pièce de frottement 23 comportent des fentes, respectivement 27 et 30, permettant le montage de ces pièces sur le câble 4. De plus, la dimension de la fente 30 et les formes de ses faces 31 et 32 sont telles que le glissement du câble 4 par rapport au frotteur 23 est obtenu avec un coefficient de frottement élevé et constant. Afin d'améliorer la qualité et la constance de ce frottement, le frotteur 23 est muni d'un ressort 310 qui tend à appuyer les faces 31 et 32 de la fente sur le câble, augmente et maintient constant le frottement du frotteur 23 sur celui-ci.

Le corps creux 10 comporte des reliefs intérieurs 12 avec lesquels coopèrent les éléments de blocage 18 et 19 de manière à éviter tout glissement relatif de la cage de verrouillage 17 par rapport au corps creux 10 lorsque les éléments de blocage 18 et 19 sont soumis à des forces latérales par l'action du cône 14, tendant à les appliquer contre le corps creux 10.

Selon une caractéristique importante de l'invention, les reliefs intérieurs 12 du corps creux 10 sont constitués de rampes hélicoïdales 21. Les éléments de blocage 18, 19 comportent des reliefs complémentaires 22 sur leur face externe coopérant avec ces rampes hélicoïdales de manière à éviter le glissement longitudinal de la cage de verrouillage 17 par rapport à l'élément creux 10 lorsque ces éléments sont engagés par l'effet du cône 14 dans les rampes hélicoïdales 21. La cage de verrouillage 17, compte tenu de son mode de jonction avec le cône 14, est libre en rotation par rapport à celui-ci.

De préférence, les reliefs complémentaires 22 sont eux-mêmes des rampes hélicoïdales. Ils peuvent aussi être des éléments de faibles dimensions constituant des doigts s'engageant dans les parties creuses des rampes hélicoïdales 21 du corps creux 10.

Un ressort 16 est placé entre le corps creux 10 et le deuxième élément de gaine 3 de manière à produire une action tendant à repousser le deuxième élément de gaine 3 vers la face arrière 102 du corps creux 10. A cet effet, la face arrière 102 du corps creux 10 comporte une surface d'appui 33 et le deuxième élément de gaine 3 comporte une protubérance 34 soit venue de moulage soit plutôt rapportée et fixée sur elle-même. Le ressort 16 travaille en compression entre la face d'appui 33 du corps creux 10 et la protubérance 34.

Le fonctionnement du dispositif de rattrapage de jeu automatique est le suivant :

- En l'absence d'action externe sur le câble 4, le ressort 16 produit une force tendant à attirer le cône 14 vers la face arrière 102 du corps creux 10. Cette face arrière 102 étant reliée par une liaison rigide à l'extrémité 21 du premier élément 2 de la gaine, le deuxième élément 3 de la gaine étant relié, également rigidement au cône 14, cet effet produit l'éloignement relatif des deux éléments de gaine 2, 3 et maintient une tension constante entre eux. En particulier, un jeu introduit soit lors du montage soit par usure au niveau de l'organe commandé est compensé par une augmentation de la distance entre les deux extrémités des éléments de gaine 2, 3. Dans ce cas, lorsque le cône 14 est attiré vers la face arrière 102 du corps creux 10, le déplacement de la cage de verrouillage 17 est freiné par le frotteur 23 et le jeu, établi dans le logement 24 par rapport à la protubérance 5, introduit un déplacement longitudinal du cône 14 relativement aux éléments de blocage 18, 19. Ce déplacement longitudinal relatif vers l'arrière élimine la force transversale susceptible d'être appliquée par le cône 14 sur les éléments de blocage 18, 19 et donc diminue le frottement entre la cage de verrouillage 17 et le corps creux 10. Le cône 14 entraîne donc le frotteur 23 qui lui-même entraîne la cage de verrouillage 17. Le mouvement longitudinal de la cage 17 entraîne simultanément par l'effet des rampes hélicoïdales 21 la rotation de cette cage 17 sur elle-même autour de l'axe 11. Ainsi, le déplacement de la cage de verrouillage 17 par rapport au corps creux 10 est continu, ce qui permet des rattrapages de jeu très faibles et évite tous les effets secondaires qui pouvaient intervenir dans les dispositifs de l'art antérieur lors d'un passage de cran.

- Lorsque le câble 4 est mis sous tension, il a tendance à engendrer un rapprochement entre les extrémités des éléments de gaine 2, 3. Le cône 14, compte tenu du jeu établi dans le logement 24 du frotteur 23, se rapproche de la cage de verrouillage 17 dont le glissement par rapport au câble 4 est freiné par le frotteur intermédiaire 23. Le cône 14 s'appuie alors sur les éléments de blocage 18 et 19 et produit leur application contre les parois internes du cylindre creux 10 et donc augmente le frottement de la cage de verrouillage 17 sur la paroi intérieure du corps creux 10. La cage de verrouillage 17 est ainsi bloquée relativement au corps creux, ce qui produit le blocage des positions relatives des extrémités des éléments de gaine 2, 3 et donc, la longueur du parcours du câble 4 entre les points fixes 5 et 6.

Le dispositif de l'invention assure donc un rattrapage continu du jeu en établissant un réglage continu des positions respectives des extrémités des éléments de gaine 2, 3.

Un résultat analogue pourrait être obtenu sans sortir du cadre de l'invention en échangeant les formes respectives des reliefs portés d'une part par l'intérieur du corps creux 10 et, d'autre part, par les éléments de blocage 18, 19. Dans ce cas, les éléments de blocage 18, 19 sont porteurs de rampes hélicoïdales et l'intérieur du corps creux 10 est porteur d'éléments complémentaires de faibles dimensions en relief, par exemple de doigts.

Le dispositif de l'invention peut également être appliqué directement contre une paroi qui constitue l'un des points fixes 5,6. L'élément de gaine correspondant, appuyé sur ce point fixe est alors remplacé, fonctionnellement par la paroi.

De préférence, les rampes hélicoïdales 21 sont composées de filets à grands pas formant un angle compris entre 15° et 60°, de préférence égal à 30° par rapport à l'axe 11 du cylindre creux 10.

Les éléments de blocage 18, 19 sont portés par des éléments de jonction 28, 29 élastiquement déformables les reliant au cylindre 171.

Le ressort 16 est protégé par un soufflet 35 ayant un contact étanche avec le corps creux 10 d'une part et avec le deuxième élément de gaine 3 d'autre part.

Afin d'éviter toute intervention intempestive sur le dispositif de rattrapage, le bouchon 13 est de préférence scellé sur le corps creux 10 de manière à ce que tout démontage du dispositif laisse des traces.

## Revendications

1. Dispositif de rattrapage (1) de jeu automatique destiné à une commande à distance par câble comprenant une gaine (2, 3) et un câble (4), le câble (4) coulissant dans la gaine, la gaine étant placée entre deux points fixes (5, 6) et comportant un élément amont (2) et un élément aval (3), ledit dispositif (1) étant placé sur la gaine entre l'élément amont (2) et l'élément aval (3) et établissant entre ces deux éléments un écart variable et une tension constante, le dit dispositif comprenant :

    • un corps creux (10) approximativement cylindrique d'axe (11) muni de reliefs intérieurs (12),

    • un bouchon (13) destiné à être fixé sur le corps creux (10) d'une part et sur un des éléments (2) de la gaine d'autre part,

• un cône (14) fixé au deuxième élément (3) de la gaine, placé à l'intérieur du corps (10), d'axe commun à l'axe du corps creux (10), son sommet (15) étant orienté vers le premier élément (2) de la gaine,

• un ressort (16) appliqué d'une part au corps creux (10), d'autre part au deuxième élément (3) de la gaine, tendant à écarter l'un de l'autre les deux éléments de la gaine,

• une cage de verrouillage (17) comportant des éléments de blocage (18, 19) régulièrement répartis entre le corps creux (10) et le cône (14), ayant des formes et dimensions complémentaires des reliefs intérieurs (12) du cylindre creux et de la face extérieure (20) du cône (14) de manière à assurer le blocage du cône (14) par rapport au corps creux (10) lorsque les éléments (2, 3) de la gaine sont soumis à une force tendant à les rapprocher, caractérisé en ce que :

• les reliefs intérieurs (12) du corps creux (10) sont constitués de rampes hélicoïdales (21),

• les éléments de blocage (18, 19) comportent des reliefs complémentaires (22) sur leur face externe,

• et la cage de verrouillage (17) est libre en rotation par rapport au cône (14).

2. Dispositif de rattrapage (1) de jeu automatique selon la revendication 1, caractérisé en ce que les reliefs complémentaires (22) des éléments de blocage (18, 19) sont des rampes hélicoïdales.

3. Dispositif de rattrapage (1) de jeu automatique selon l'une quelconque des revendications 1 ou 2, caractérisé en ce que les rampes hélicoïdales (21) sont composées de filets à grands pas formant un angle compris entre 15° et 60°, de préférence égal à 30° avec l'axe 11 du cylindre creux (10).

4. Dispositif de rattrapage (1) de jeu automatique selon l'une quelconque des revendications 1 à 3, caractérisé en ce que la cage de verrouillage (17) est reliée au cône (14) par un frotteur intermédiaire (23) qui comporte un logement (24) qui enserre une protubérance du cône (25) et est fixé à la cage de verrouillage (17), ce frotteur intermédiaire (23) étant libre en rotation par rapport au cône (14) et fixé par une liaison (26) à frottement sur le câble (4).

5. Dispositif de rattrapage (1) de jeu automatique selon la revendication 4, caractérisé en ce que les dimensions respectives du logement (24) de la pièce intermédiaire (23) et de la protubérance (25) du cône (14) sont telles qu'un jeu axial est ménagé entre le cône (14) et le frotteur intermédiaire (23) de telle sorte que lors d'un mouvement de rapprochement relatif des deux éléments (2, 3) du câble (4), le cône (14) appuie sur les éléments de blocage (18, 19) et qu'il les libère lors d'un mouvement d'écartement relatif de ces deux éléments (2, 3).

6. Dispositif de rattrapage (1) de jeu automatique selon l'une quelconque des revendications 1 à 5, caractérisé en ce que la cage de verrouillage (17) est monobloc et qu'elle comporte une fente axiale (27) permettant le passage du câble (4).

7. Dispositif de rattrapage (1) de jeu automatique selon l'une quelconque des revendications 1 à 6, caractérisé en ce que les éléments de blocage (18, 19) sont portés par des éléments de jonction (28, 29) élastiquement déformables.

8. Dispositif de rattrapage (1) de jeu automatique selon l'une quelconque des revendications 4 à 7, caractérisé en ce que le frotteur (23) comporte une pièce monobloc ayant une fente axiale (30) permettant le passage du câble (4) et un ressort (310) tendant à appuyer les faces (31, 32) de la fente sur le câble (4) de manière à augmenter le frottement du frotteur (23) sur le câble (4).

9. Dispositif de rattrapage (1) de jeu automatique selon l'une quelconque des revendications 1 à 8, caractérisé en ce que :

• le corps creux (10) comporte une face d'appui (33),

• le deuxième élément de gaine (3) comporte une protubérance (34),

• le ressort (16) travaillant en compression entre la face d'appui (33) du corps creux (10) et la protubérance (34).

10. Dispositif de rattrapage (1) de jeu automatique selon la revendication 9, caractérisé en ce que le ressort (16) est protégé par un soufflet (35) ayant un contact étanche avec le corps creux (10) d'une part et le deuxième élément de gaine (3) d'autre part.

11. Dispositif de rattrapage (1) de jeu automatique selon l'une quelconque des revendications 1 à 10, caractérisé en ce que le bouchon (13) est scellé sur le corps creux (10) de telle sorte que tout démontage laisse des traces.

FIG.1

FIG.2

EP 0 430 787 A1

<u>FIG.3</u>

14       142

141

143

25

<u>FIG.4</u>

17    19

29

27    18

171    28

<u>FIG.5</u>

23    234

310    235

30    233

232    231

Office européen
des brevets

# RAPPORT DE RECHERCHE EUROPEENNE

Numero de la demande

EP  90 40 3339

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 577 330  (SOCIETE ANONYME BENDIX)<br>* pages 6,7; figures 1,2 *<br>--- | 1 | F 16 C    1/22 |
| A | DE-U-8 611 403  (VOITH TURBO GMBH & CO. KG)<br>* page 7, figures 1,2 *<br>--- | 1,2 | |
| A | DE-A-3 533 405  (KUESTER & CO. GMBH)<br>--- | | |
| A | EP-A-0 183 589  (BENDIX FRANCE)<br>--- | | |
| A | EP-A-0 244 303  (ROCKWELL-CIM)<br>----- | | |

DOMAINES TECHNIQUES RECHERCHES (Int. Cl.5)

F 16 C
F 16 D
B 60 K

Le présent rapport a été établi pour toutes les revendications

| Lieu de la recherche | Date d'achèvement de la recherche | Examinateur |
|---|---|---|
| BERLIN | 01-03-1991 | HOFFMANN M.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)